# EUROPÄISCHE PATENTSCHRIFT

(11) **EP 3 344 395 B1**
(45) Veröffentlichungstag und Bekanntmachung des Hinweises auf die Patenterteilung: **10.07.2019**
(21) Anmeldenummer: 16754256.2
(22) Anmeldetag: 12.08.2016
(51) Int. Cl.: B02C 18/36, B02C 23/04, B02C 18/30

(54) **FLEISCHWOLF MIT GEHÄUSE, MINDESTENS EINER FÖRDEREINRICHTUNG UND MINDESTENS EINEM SCHNEIDSATZTEIL**
MINCING MACHINE WITH HOUSING, AT LEAST ONE CONVEYER AND AT LEAST ONE CUTTING ASSEMBLY
HACHOIR À VIANDE AVEC UNE BOITE, AU MOINS UN CONVOYEUR ET AU MOINS UN ENSEMBLE DE COUPE

(30) Priorität: 04.09.2015 DE 102015114891
(43) Veröffentlichungstag der Anmeldung: 11.07.2018
(73) Patentinhaber: Turbocut Jopp GmbH, 97616 Bad Neustadt (DE)
(72) Erfinder: GOETZE, Wolf, 97616 Bad Neustadt (DE); SAUER, Norbert, 97496 Burgpreppach (DE); BACK, Udo, 97702 Reichenbach (DE); BÜCHS, Hubert P., 97618 Leutershausen (DE)
(74) Vertreter: Buchenau, Thomas
(86) Internationale Anmeldenummer: PCT/EP2016/069263
(87) Internationale Veröffentlichungsnummer: WO 2017/036773

(56) Entgegenhaltungen:
- EP-A1- 1 201 312
- DE-U1-202007 003 778

## Beschreibung

Die Erfindung betrifft einen Fleischwolf mit einem Gehäuse, mindestens einer Fördereinrichtung und mindestens einem Schneidsatzteil.

Unter einem Fleischwolf wird im Allgemeinen eine Vorrichtung zum Zerkleinern, Mahlen und/oder Vermengen von - meist organischen - Stoffen verstanden. Zu solchen Stoffen zählen neben Fleisch auch andere Waren. Fleischwölfe umfassen üblicherweise eine Zuführöffnung (z.B. einen Einfülltrichter) für die Befüllung des Fleischwolfs mit dem zu bearbeitendem Stoff sowie einen in einem Gehäuse ausgebildeten Förderkanal mit einer Fördereinrichtung. Als Fördereinrichtung kommt meist eine Förderschnecke zum Einsatz, die beispielsweise drehfest mit einer Antriebswelle verbunden ist oder an einer Antriebswelle ausgebildet sein kann. Die Förderschnecke oder sonstige Fördereinrichtung fördert den eingefüllten, zu wolfenden Stoff in Richtung der Drehachse der Antriebswelle von einer Zuführöffnung zu einer Austrittsöffnung. Im Förderbereich der Förderschnecke, insbesondere am Ausgang der Förderschnecke, sind regelmäßig sogenannte Schneidsatzteile angeordnet, die entweder als feststehende Teile drehfest gegenüber dem Gehäuse festgelegt oder als rotierende Teile drehfest mit der Antriebswelle verbunden sind. Eine drehfeste Verbindung mit der Antriebswelle kann beispielsweise durch eine formschlüssige Steckverbindung zwischen Antriebswelle und dem von der Antriebswelle anzutreibenden Schneidsatzteil realisiert sein, insbesondere durch Verwendung einer profilierten Antriebswelle (z.B. Welle mit einer Abflachung oder mehreren Abflachungen oder Sechskantwelle) und Aufstecken eines entsprechend ausgebildeten Schneidsatzteils. Üblicherweise kommen in einem Fleischwolf als Schneidsatzteile mindestens eine Lochscheibe und mindestens ein Schneidmesser zum Einsatz. Hinsichtlich weiterer Schneidsatzteile wird insbesondere auf Vorschneider und Stützkreuze verwiesen. Während Lochscheiben, Stützkreuze und Vorschneider im Allgemeinen im Gehäuse festgelegt sind, werden Schneidmesser üblicherweise rotierbar angeordnet und dazu drehfest mit der Antriebswelle verbunden. Schneidmesser rotieren daher mit der gleichen Winkelgeschwindigkeit wie die Förderschnecke.

Der zu bearbeitende Stoff wird in den meisten Fällen, durch die Fördereinrichtung, z.B. eine Förderschnecke, in Richtung einer vor der Austrittöffnung angeordneten Lochscheibe gefördert und vor der Lochscheibe mittels mindestens eines Schneidmessers geschnitten. Alle Schneidsatzteile sind üblicherweise mittels einer Überwurfmutter in axialer Richtung miteinander verspannt. Es können mehrere Messerscheibe-Lochscheibe-Kombinationen hintereinander angeordnet werden.

Es wird darauf hingewiesen, dass ein Fleischwolf für spezielle Anwendungen auch nur mit einem Schneidsatzteil betrieben werden kann, insbesondere nur mit einer Lochscheibe. Der durch die Lochscheibe gepresste Stoff kann in diesem Fall beispielsweise bedarfsweise manuell hinter der Lochscheibe abgetrennt werden, oder der durch die Lochscheibe zu fördernde Stoff wird portionsweise zugeführt, so dass die Trennung der Stoffmengen über die Zufuhrseite geregelt wird.

Aus DE 20 2007 003 778 U1 ist ein Vorlege- und Distanzring zum Einsatz in Fleischwölfen bekannt, welcher zwischen einer Endlochscheibe und einer Überwurfmutter einsetzbar ist. Der Ring weist eine codierte, elektronisch abrufbare Bauteilerkennung in Form eines RFID-Chips auf, der mit einer Steuerung verknüpft ist. Mittels des RFID-Chips und der Steuerung soll eine Inbetriebnahme des Fleischwolfs vermieden werden können, wenn der Vorlagering nicht ordnungsgemäß eingesetzt ist. Wie der RFID-Chip ausgelesen sein soll, ist nicht beschrieben und erscheint in der dargelegten Form gemäß dem Stand der Technik auch nicht möglich. Darüber hinaus ist ein Vorlegering im Gehäuse eines Fleischwolfs von untergeordneter Bedeutung und für die Funktion eines Fleischwolfes nicht erforderlich.

Aus EP 1 201 312 A1 ist ein Fleischwolf gemäß dem Oberbegriff des Anspruchs 1 bekannt. Der Fleischwolf hat eine Lochscheibe, wobei die Lochscheibe ein Mittel aufweist, auf dem Daten abgespeichert und abgerufen werden können, die eine eindeutige Identifikation der Lochscheibe ermöglichen. Die Mittel sollen bevorzugt in einem abgeschlossenen Hohlraum in der Lochscheibe angeordnet sein. Eine Sende- und Empfangseinheit ist außerhalb eines Gehäuses der Zerkleinerungsmaschine angeordnet.

Der Erfindung liegt die Aufgabe zugrunde, die Sicherheit und die Funktionalität eines Fleischwolfs zu erhöhen.

Die Lösung der Aufgabe erfolgt erfindungsgemäß mit den Merkmalen des unabhängigen Anspruchs 1. Weitere praktische Ausführungsformen und Vorteile der Erfindung sind in Verbindung mit den abhängigen Ansprüchen beschrieben.

Ein erfindungsgemäßer Fleischwolf umfasst ein Gehäuse, mindestens eine Fördereinrichtung zur Förderung von zu wolfendem Material von einer Eintrittsöffnung zu einer Austrittsöffnung und mindestens ein in dem Gehäuse angeordnetes Schneidsatzteil. Dabei sind in oder an dem mindestens einen Schneidsatzteil mindestens ein Transponder und in oder an dem Gehäuse mindestens eine Kommunikationsvorrichtung zur Kommunikation mit dem Transponder derart angeordnet, dass ein Datenaustausch zwischen Kommunikationsvorrichtung und Transponder ermöglicht ist. Unter einer Kommunikationsvorrichtung werden vorliegend insbesondere Lesevorrichtungen, Schreibvorrichtungen und/oder Lese- und Schreibvorrichtungen verstanden, die als Lesevorrichtungen Daten von einem Transponder auslesen und als Schreibvorrichtungen auch Daten aktiv an einen Transponder übermitteln können. Vorzugsweise umfasst die Kommunikationsvorrichtung und/oder der Transponder eine Antenne, insbesondere für einen einfachen und berührungslosen Datenaustausch. Als Transponder besonders geeignet sind RFID-Chips, wobei besonders passive RFID-Chips bevorzugt sind, welche keine eigene Energiequelle benötigen, sondern die zur Verwendung des RFID-Chips erforderliche Energie aus einem Strahlungsfeld beziehen können, insbesondere aus einem von der Kommunikationsvorrichtung bereitgestellten Strahlungsfeld. Mit Hilfe eines erfindungsgemäßen Fleischwolfs können die Sicherheit und die Funktionalität eines Fleischwolfs auf einfache Art und Weise erhöht werden, insbesondere wie nachfolgend im Detail beschrieben.

Die Kommunikationsvorrichtung ist innerhalb des Gehäuses angeordnet. In Ergänzung dazu ist der Transponder innerhalb des Schneidsatzteils angeordnet. Diese Anordnung hat den Vorteil, dass sie zum einen wenig Bauraum beansprucht und zum anderen eine geschützte Anordnung von Kommunikationsvorrichtung und/oder Transponder ermöglicht, wobei ein besonders effektiver Schutz vor äußeren mechanischen oder sonstigen Einflüssen gegeben ist, wenn die Kommunikationsvorrichtung vollständig innerhalb des Gehäuses angeordnet ist bzw. der Transponder vollständig innerhalb des Schneidsatzteils angeordnet ist. Damit ist gemeint, dass das jeweilige Element, d.h. die Kommunikationsvorrichtung und/oder der Transponder allseitig von dem Gehäuse, dem Schneidsatzteil und/oder einem weiteren Element umschlossen ist und somit nicht in direkten Kontakt zu dem zu bearbeiten Stoff und/oder sonstigen Elementen kommen kann, die mit dem Gehäuse und/oder dem Schneidsatzteil bei deren bestimmungsgemäßer Verwendung in Kontakt treten könnten. Die Kommunikation zwischen Transponder und Kommunikationsvorrichtung ist nur sicher realisierbar, wenn Transponder und Kommunikationsvorrichtung einander unmittelbar gegenüberüberliegen und nicht von Metall umschlossen sind.

In den meisten Gehäusen von Fleischwölfen ist mindestens ein erstes Element zur Verdrehsicherung angeordnet oder ausgebildet, um mindestens ein Schneidsatzteil mit einem zweiten, korrespondierenden Element einer Verdrehsicherung verdrehsicher in dem Gehäuse anzuordnen. Als Elemente zur Verdrehsicherung in Fleischwölfen dienen oft ein gehäuseseitiger sogenannter Nutenstein, welcher einstückig am Gehäuse ausgebildet oder als separates Element in dem Gehäuse angeordnet sein kann, sowie eine in einem Schneidsatzelement ausgebildete, korrespondierende Nut. Als Verdrehsicherung können aber auch sonstige Elemente dienen, insbesondere ein oder mehrere, beliebig geformte Vorsprünge, die mit in Schneidsatzteilen ausgebildeten Öffnungen korrespondieren und somit zum einen sicherstellen, dass das jeweilige Schneidsatzteil in einer vorgegebenen, bestimmten Orientierung in das Gehäuse eingesetzt wird und zum anderen sicherstellen, dass das eingesetzte Schneidsatzteil nicht in Umfangsrichtung innerhalb des Gehäuses verdrehbar ist. In einer besonders bevorzugten Ausführungsform eines erfindungsgemäßen Fleischwolfs ist mindestens eine Kommunikationsvorrichtung in oder an dem ersten Element der Verdrehsicherung angeordnet und mindestens ein Transponder in oder an dem zweiten, korrespondierenden Element der Verdrehsicherung angeordnet.

Bei Fleischwölfen mit Nutenstein und Schneidsatzteilen mit korrespondierenden Nuten ist es bevorzugt, wenn das erste Element der Verdrehsicherung ein Nutenstein und das zweite Element der Verdrehsicherung eine mit dem Nutenstein korrespondierende Nut ist. In Nutenstein und Nut lassen sich eine Kommunikationsvorrichtung bzw. ein Transponder sicher, einfach, kostengünstig und in vielen Fällen auch noch nachträglich im Wege der Nachrüstung eines Fleischwolfs bzw. Schneidsatzteils integrieren. Ferner ist bei jedem Fleischwolf mit Nutenstein und Nut sichergestellt, dass diese in unmittelbarer Nähe zueinander angeordnet werden.

Unabhängig davon, ob es sich um einen Fleischwolf mit Nutenstein und Nut, mit einer sonstigen Verdrehsicherung oder um einen Fleischwolf eines anderen Typs handelt, ist es bevorzugt, wenn mindestens ein Transponder in einer in dem Schneidsatzteil ausgebildeten Öffnung und/oder mindestens eine Kommunikationsvorrichtung in einer in dem Gehäuse ausgebildeten Öffnung eingesetzt ist. Neben dem bereits angesprochenen Aspekt der Sicherheit lassen sich derartige Öffnungen auch einfach und kostengünstig herstellen, insbesondere auch nachträglich, wenn an dem Gehäuse bzw. an dem Schneidsatzteil ausreichend Material zur Ausbildung einer Öffnung vorhanden ist. Die Öffnungen in Schneidsatzteilen werden vorzugsweise in radialer Richtung betrachtetet von der Außenseite her eingebracht. Die Transponder werden innerhalb der Schneidsatzteile oder an den Schneidsatzteilen vorzugsweise möglichst weit außen positioniert. In Schneidmessern kann die Positionierung beispielsweise an der Außenseite von zumindest teilweise radial orientierten Messerschneiden bzw. Messerflügeln erfolgen.

Falls die Öffnung nach dem Einsetzen des Transponders bzw. der Kommunikationsvorrichtung verschlossen werden soll, eignen sich insbesondere nicht-metallische Werkstoffe, welche elektrische und/oder magnetische Strahlungsfelder nicht oder nur geringfügig beeinträchtigen. Insbesondere wird auf lebensmittelsichere Werkstoffe verwiesen, wie beispielsweise Harze oder Klebstoffe, die in einem flüssigen oder zumindest fließfähigen Zustand in die Öffnung eingebracht werden können und anschließend aushärten.

In einer weiteren praktischen Ausführungsform eines erfindungsgemäßen Fleischwolfs sind die in dem Schneidsatzteil ausgebildete Öffnung und die in dem Gehäuse ausgebildete Öffnung gegenüberliegend angeordnet. Damit ist insbesondere eine Anordnung gemeint, die mindestens eine direkte, d.h. geradlinige, Verbindung zwischen einer in die Öffnung eines Gehäuses eingesetzten Kommunikationsvorrichtung und einem in die Öffnung eines Schneidsatzteils eingesetzten Transponders durch die Öffnungen hindurch ermöglicht, insbesondere so, dass kein metallisches Element des Fleischwolfs diese direkte Verbindung kreuzt. Mit einer solchen Anordnung kann einerseits eine Kommunikationsvorrichtung mit einer nur geringen Leistung eingesetzt werden, da die Distanz zwischen Kommunikationsvorrichtung und Transponder sehr klein gewählt werden kann. Andererseits ergibt sich eine hohe Funktionssicherheit hinsichtlich der Kommunikation zwischen Kommunikationseinheit und Transponder, weil die gewählte Anordnung der Öffnungen eine Eliminierung metallischer Störeinflüsse durch andere Elemente des Fleischwolfs ermöglicht.

In einer weiteren praktischen Ausführungsform eines Fleischwolfs weist die Kommunikationsvorrichtung Mittel zum Senden von Daten an den Transponder sowie Mittel zum Empfangen von Daten von dem Transponder auf und ist mit einer elektronischen Schaltung und/oder einer Maschinensteuerung verbunden. In diesem Fall können die Kommunikationsvorrichtung und die Transponder dazu eingesetzt werden, Daten hinsichtlich der Schneidsatzteile abzufragen und diese funktions- und/oder sicherheitsrelevant in die elektronische Schaltung und/oder Maschinensteuerung einzubinden. Diesbezüglich wird insbesondere auf einfache Abfragen verwiesen, wie beispielsweise, ob in einen bestimmten Fleischwolftyp, der unabhängig vom aktuellen Einsatzzweck nur mit einem vorgegebenen, mit einem Transponder ausgestatteten Schneidsatzteil betreibbar sein soll, dieses Schneidsatzteil eingesetzt ist. Dazu kann die Kommunikationsvorrichtung die Mittel zum Senden von Daten an den Transponder sowie die Mittel zum Empfangen von Daten von dem Transponder nutzen, um zu ermitteln, ob das Schneidsatzteil vorhanden ist und der elektronischen Schaltung bzw. der Maschinensteuerung nur dann die Freigabe zur Aktivierung des Fleischwolfs erteilen, wenn diese Voraussetzung erfüllt ist. Mit einem erfindungsgemäßen Fleischwolf können somit sicherheitsrelevante Aspekte elektronisch mittels Kommunikationsvorrichtung und Transponder sowie einer geeigneten Kopplung an die oben erwähnten Mittel zum Senden und Empfangen von Daten implementiert werden. Dies ermöglicht es, auf gleichwirkende mechanische Sicherungselemente zu verzichten, die meist mit höheren Herstellungskosten verbunden sind. Diesbezüglich wird insbesondere auf einen sogenannten Auslaufschutz für Fleischwölfe verwiesen, auf den verzichtet werden könnte, wenn durch die beschriebene elektronische Sicherung gewährleistet ist, dass der Fleischwolf nur aktivierbar ist, wenn auslaufseitig eine Lochscheibe mit Durchtrittsöffnungen mit einem festgelegten Maximaldurchmesser (beispielsweise 8 mm) eingesetzt ist. Auf einem RFID-Chip können auch detaillierte Daten (Informationen) zu dem jeweiligen Schneidsatzelement gespeichert und aktualisiert werden. Diesbezüglich wird insbesondere auf den Herstellernamen, Typ, Datum der Herstellung, Seriennummer, Elementart, Lochmuster, Benutzungszeiten, verwendete Maschinen (Fleischwölfe), Betriebsart des Fleischwolfs während der jeweiligen Nutzung, Zeitpunkt durchgeführter Wartungen (Wartungsintervalle) etc. verwiesen.

Die Erfindung betrifft auch einen Fleischwolf, bei dem die vorstehend erwähnte elektronische Schaltung und/oder Maschinensteuerung ein Prüfmodul zur Durchführung sicherheitsrelevanter und/oder funktionaler Prüfprozeduren unter Einbeziehung des mindestens einen Transponders umfasst. Mit dem Begriff "Umfassen" ist vorliegend nicht nur eine Integration des Prüfmoduls, sondern auch eine funktionale Kopplung eines solchen Prüfmoduls mit der elektronischen Schaltung und/oder Maschinensteuerung gemeint. Mittels eines solchen Prüfmoduls könnte beispielsweise abgefragt werden, welche Schneidsatzteile aktuell in dem Fleischwolf eingesetzt sind. Es könnte ferner abgefragt werden, in welcher Reihenfolge die Schneidsatzteile in den Fleischwolf eingesetzt sind. Dazu können entweder über die Förderstrecke des Fleischwolfs mehrere Kommunikationsvorrichtungen angeordnet sein, die an ihrer jeweiligen Position die korrespondierenden Transponder abfragen und so ermitteln, welches Schneidsatzteil an der jeweiligen Stelle angeordnet ist. Alternativ können auch mittels einer Kommunikationsvorrichtung mehrere Transponder abgefragt und die Position der jeweiligen Transponder mittels einer ratiometrischen Bestimmung und/oder mittels in den Transpondern gespeicherter Inhalte ermittelt werden.

Insbesondere für die vorstehend erwähnte ratiometrische Bestimmung kann es vorteilhaft sein, wenn im Bereich der Austrittsöffnung die mindestens eine Kommunikationsvorrichtung angeordnet ist, denn in diesem Fall ist der Abstand zu jedem Schneidsatzelement mit einem darin oder daran angeordneten Transponder unterschiedlich. Besonders platzsparend kann in diesem Fall eine Spulenantenne in dem Gehäuse des Fleischwolfs angeordnet werden, vorzugweise mit Mitteln zur direkten oder indirekten Messung der Entfernung zwischen Kommunikationsvorrichtung und dem Absendeort der Signale eines oder mehrerer in der Reichweite der Kommunikationsvorrichtung angeordneter Transponder.

Es wird darauf hingewiesen, dass die Transponder - insbesondere RFID-Chips - auch zur Speicherung, Aktualisierung und zum Abrufen von Informationen von Schneidsatzteilen genutzt werden können, insbesondere verschleißrelevante Informationen. Diesbezüglich wird insbesondere auf die Standzeit sowie eingestellter Maschinenparameter während der Standzeit der einzelnen Schneidsatzteile verwiesen. Diese Informationen können - insbesondere in Verbindung mit einem Prüfmodul - zum einen genutzt werden, um einen Austausch einzelner Schneidsatzteile anzukündigen oder zu erzwingen und zum anderen, um mittels weiterer Kommunikationsverbindungen ggf. eine Überprüfung vorzunehmen, ob noch ein Ersatzteil für das auszutauschende Schneidsatzteil in einem (betriebsinternen) Lager verfügbar ist. Ist dies der Fall, kann das neu einzusetzende Schneidsatzteil ggf. direkt automatisiert bereitgestellt und/oder eingesetzt werden. Ist dies nicht der Fall, kann ggf. eine automatische Bestellung eines neu einzusetzenden Schneidsatzteils initiiert oder angeboten werden. Ein erfindungsgemäßer Fleischwolf kann somit funktional sehr vielseitig eingesetzt werden.

Es wird noch auf folgende, optionale Merkmale eines erfindungsgemäßen Fleischwolfs verwiesen, die einzeln oder in Kombination zusätzlich zu den vorstehend erwähnten Merkmalen realisiert sein können:
a) Die Fördereinrichtung umfasst eine Antriebswelle, auf welcher mindestens ein Schneidsatzteil angeordnet und mittels einer Überwurfmutter in axialer Richtung fixiert ist.
   Solche Fleischwölfe sind in der Praxis nicht nur häufig anzutreffen, sondern auch besonders flexibel einsetzbar, da die Zahl und Reihenfolge der für einen Bearbeitungsvorgang gewünschten Schneidsatzteile beliebig variiert werden kann, wobei durch die Länge des Gehäusebereichs des Fleischwolfes, in welchen Schneidsatzteile einsetzbar sind, in Verbindung mit der in Förderrichtung gemessenen Dicke der Schneidsatzelemente die maximale Zahl an in einen Fleischwolf einsetzbaren Schneidsatzteilen vorgegeben ist.
b) Die Fördereinrichtung ist eine mit einer Antriebswelle verbundene oder an einer Antriebswelle ausgebildete Förderschnecke, die teilweise im Gehäuse und teilweise gegenüber mindestens einem Schneidsatzteil gelagert ist.
   Eine solche Lagerung ist praktisch in allen Fleischwölfen realisiert. Durch die Lagerung der Antriebswelle in einem oder mehreren Schneidsatzteilen können radiale Kräfte vorteilhaft aufgenommen werden.
c) Mindestens ein Transponder ist in einem äußeren Bereich eines Schneidsatzteils angeordnet.
   Mit dem äußeren Bereich ist insbesondere derjenige Bereich gemeint, welcher sich - gemessen von der Drehachse bis zum jeweils äußeren Umfangspunkt - über die äußeren 50 Prozent des Radius erstreckt. Bevorzugt sind die Transponder in dem sich über 30 Prozent des Radius erstreckenden äußeren Bereich angeordnet, weiter bevorzugt in dem sich über 20 Prozent erstreckenden und besonders bevorzugt in dem sich über 10 Prozent erstreckenden äußeren Bereich angeordnet. Je weiter die Transponder angeordnet sind, desto geringer ist die zu überbrückende Strecke für zwischen Transponder und Kommunikationsvorrichtung auszutauschende Signale.
d) Es ist eine Anzeige für einen Benutzer für mittels Kommunikationsvorrichtung und Transponder ermittelte funktionsrelevante und/oder sicherheitsrelevante Informationen vorgesehen.
   Bei einer solchen Anzeige kann es sich in einem einfachen Fall beispielsweise um eine Kontroll-Leuchte handeln, die aufleuchtet, sobald mittels Kommunikationsvorrichtung und Transponder(n) ggf. in Verbindung mit einem Prüfmodul, mit einer Steuervorrichtung und/oder mit einer elektronischen Schaltung festgestellt wurde, dass eine sicherheitsrelevante oder funktionale Bedingung erfüllt ist (oder mehrere sicherheitsrelevante und/oder funktionale Bedingungen) und der Fleischwolf aktiviert werden kann. Es kann sich ferner auch um graphische Anzeigen und/oder um Anzeigen von Textnachrichten handeln, beispielsweise eine Anzeige, aus welcher ersichtlich ist, welche Schneidsatzteile gerade in welcher Reihenfolge in dem Gehäuse eingesetzt sind, wann welches der eingesetzten Schneidsatzteile plangemäß ausgetauscht werden muss, wie die aktuelle Schneidsatzanordnung bezeichnet wird (z.B. 3-teilige Schneidsatzanordung, 5-teilige Schneidsatzanordnung etc.) und/oder dass es sich um eine unbekannte Schneidsatzanordnung handelt bzw. dass bestimmte Schneidsatzteile falsch angeordnet sind oder dass bestimmte Schneidsatzteile nicht dem erforderlichen Qualitätsstandard entsprechen. Die Anzeige kann auch eine Eingabeeinheit umfassen, um den Benutzer die Möglichkeit zu geben, Eingaben vorzunehmen bzw. das Lesen von Meldungen zu bestätigen und den Fleischwolf trotz einer Fehler-, Hinweis oder Warnmeldung in Betrieb zu nehmen.
e) Es ist ein Festspeicher und/oder eine Fernmeldeeinrichtung vorgesehen.
   Ein Festspeicher und/oder eine Fernmeldeeinrichtung können insbesondere eingesetzt werden, um Daten eines Transponders mit in einer Datenbank gespeicherten Daten zu vergleichen. Mit einer solchen Anordnung können, insbesondere in Verbindung mit dem Zugriff auf eine Maschinensteuerung- ergänzende oder mechanische Sicherungen ersetzende - elektronische Maßnahmen getroffen werden, mittels welchen die Sicherheit bzw. Funktionalität eines Fleischwolfs weiter erhöht wird. Ferner können Informationen zu mehreren Geräten ohne zusätzlichen Aufwand zentral erfasst und ausgewertet werden, insbesondere über das Internet und/oder über eine Funkverbindung (z.B. Mobilfunk oder WLAN).
f) Die Anordnung des mindestens einen Transponders in oder an dem Schneidsatzteil und der mindestens einen Kommunikationsvorrichtung in oder an dem Gehäuse erfolgt in einer Art und Weise, dass ein nicht korrekt in das Gehäuse eingesetztes Schneidsatzteil aufgrund der relativen Lage von Transponder zu Kommunikationsvorrichtung erkennbar ist.
   Erkennbar sein sollen insbesondere rückwärts eingesetzte Schneidsatzteile, die zwar innerhalb des Fleischwolfs an der richtigen Position, aber falsch herum, d.h. um 180° verdreht, eingesetzt sind. Dies kann insbesondere durch außermittige Anordnung des Transponders und/oder der Kommunikationsvorrichtung erfolgen. Dabei genügt es, wenn der Transponder in Förderrichtung außermittig oder quer zur Förderrichtung in Bezug auf die in Förderrichtung verlaufende Mittelachse eines Nutensteins außermittig Anordnung realisiert ist.
   Wenn die Anordnung mehrfach außermittig erfolgt, kann die Sicherheit zusätzlich erhöht werden.
   Die Anordnung der Kommunikationsvorrichtung kann auch außerhalb des Nutensteins im Gehäuse erfolgen, beispielsweise an einer anderen Position als genau gegenüber eines einzigen Nutensteins. In diesem Fall können sich eine im Gehäuse eingebaute Kommunikationsvorrichtung und ein in der korrekten Einbausituation genau gegenüberliegender Transponder bei Rückwärtseinbau (d.h. um 180° verdrehtem Einbau) des Schneidsatzteils nicht gegenüberliegen. Eine derartige Fehlmontage ist von der Kommunikationsvorrichtung unmittelbar detektierbar. Diese Variante hat den weiteren Vorteil, dass die Festigkeit des Nutensteins vollständig erhalten bleibt, da in den Nutenstein keine Öffnung für die Anordnung einer Kommunikationsvorrichtung eingebracht werden muss.

Weitere praktische Ausführungsformen sind nachfolgend im Zusammenhang mit den Zeichnungen beschrieben. Es zeigen:
- Fig. 1: einen Ausschnitt eines Gehäuses eines erfindungsgemäßen Fleischwolfs mit einem eingesetzten Schneidsatzteil in einer perspektivischen Darstellung sowie eine schematische Verbindung zu einer elektronischen Schaltung und einer Maschinensteuerung sowie
- Fig. 2: den in Figur 1 mit II gekennzeichneten Bereich des Gehäuses in einer Querschnittdarstellung im Bereich des Schneidsatzteils.

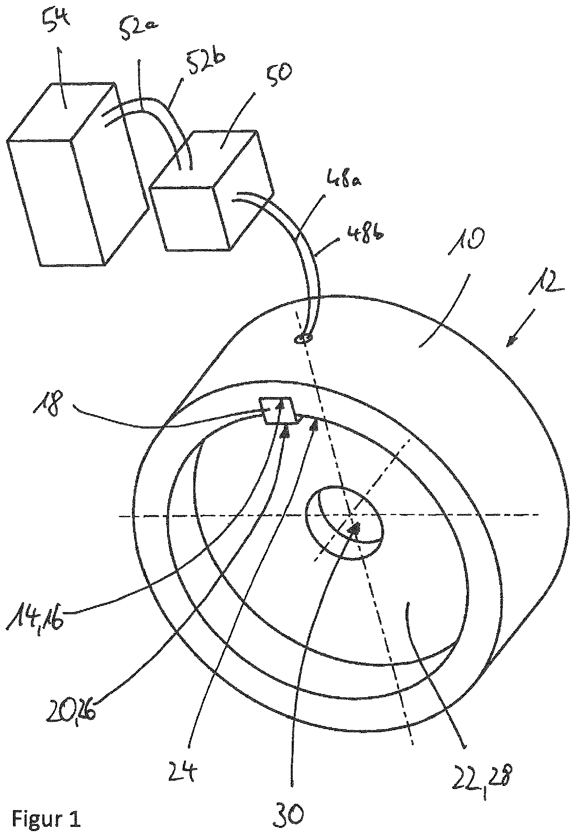

Figur 1 zeigt einen hohlzylindrisch ausgebildeten Ausschnitt 10 eines Gehäuses 12 eines nicht als Ganzes dargestellten Fleischwolfs. An der Oberseite des Gehäuses 12 ist als Vertiefung 14 eine Nut 16 ausgebildet, in welcher ein Nutenstein 18 eingesetzt ist. Der Nutenstein 18 bildet einen gegenüber der Innenwand 24 des Gehäuses 12 hervorstehenden Vorsprung 20, welcher als Verdrehsicherung 26 für Schneidsatzteile dient. Ein eingesetztes Schneidsatzteil 22 in Form einer stark vereinfacht dargestellten Lochscheibe 28 ist in Figur 1 gezeigt.

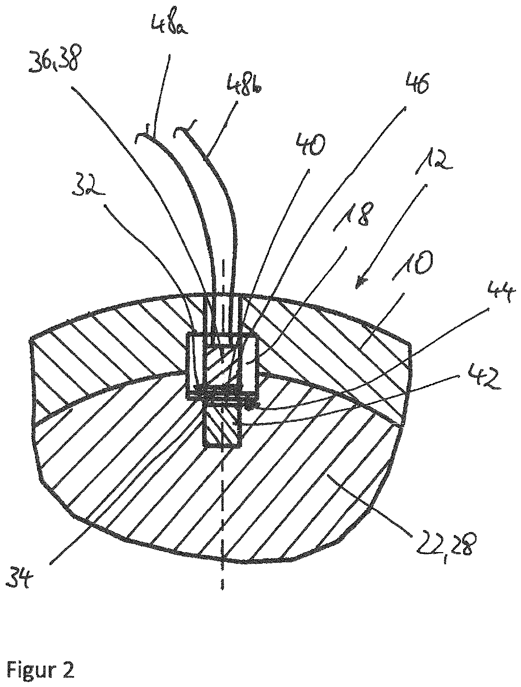

Wie aus Figur 2 ersichtlich ist, ist der Lochscheibe 28 eine Nut 32 ausgebildet, die komplementär zu dem Nutenstein 18 des Gehäuses 12 geformt ist.

Die in den Figuren 1 und 2 dargestellte Lochscheibe 28 weist im Wesentlichen die Form einer Kreisscheibe auf. Die Lochscheibe 28 weist eine konzentrisch angeordnete Durchgangsöffnung 30 auf, welche der Durchführung einer nicht dargestellten Antriebswelle dient. Die nicht dargestellte Antriebswelle kann auch zur Lagerung weiterer Elemente eines Fleischwolfs dienen. Üblicherweise ist die Antriebswelle drehfest mit einer Förderschnecke verbunden, ragt durch sämtliche Schneidsatzteile hindurch. Eine nicht dargestellte Überwurfmutter sorgt durch axiales Verpressen der Schneidsatzteile für eine sichere Anlage der Schneidsatzteile aneinander. Lochscheiben und Stützkreuze sind üblicherweise gehäusefest angeordnet und somit gegenüber der Antriebswelle drehbar gelagert. Vorschneider und Schneidmesser sind üblicherweise drehfest mit der Antriebswelle verbunden und werden durch die Antriebswelle angetrieben.

Der Nutenstein 18 kann sich über einen größeren Längenabschnitt des Fleischwolfs (in Förderrichtung betrachtet) erstrecken, um zur drehfesten Anordnung mehrerer Schneidsatzteile dienen zu können.

Es wird darauf hingewiesen, dass - abweichend zu dem beschriebenen Ausführungsbeispiel - auch einstückig an der Innenwand 24 eines Gehäuses 12 eines Fleischwolfs ein oder mehrere Vorsprünge 20 ausgebildet sein können. Dies entspricht funktional der Anordnung eines separaten Nutensteins 18 in einer Nut 16. Es können auch mehrere Nutensteine 18 in einem Gehäuse 12 angeordnet und/oder mehrere Vorsprünge 24 in einem Gehäuse 12 ausgebildet sein, beispielsweise um für jedes potentiell gehäusefest festzulegende Schneidsatzteil einen korrespondierenden Vorsprung 24 zur Verfügung zu stellen.

Wie aus Figur 2 ersichtlich, ist in dem dargestellten Ausführungsbeispiel in dem Nutenstein 18 eine Öffnung 34 eingebracht, in welche eine als Kommunikationsvorrichtung 36 mit Antenne 38 eingesetzt ist. In dem Schneidsatzteil 22 (hier: Lochscheibe 28) ist ebenfalls eine Öffnung 40 eingebracht, in welche ein Transponder 42 eingesetzt ist.

Wie aus Figur 2 ersichtlich ist, sind die Kommunikationsvorrichtung 36 und der Transponder 42 jeweils vollständig in die korrespondierenden Öffnungen 34, 40 eingebracht. Im vorliegenden Fall sind die Kommunikationsvorrichtung 36 und der Transponder 42 sogar so weit in die korrespondierenden Öffnungen 34, 40 eingesetzt, dass ein Freiraum zwischen der Kommunikationsvorrichtung 36 und der zum Förderraum gerichteten Seitenwand 44 des Nutensteins 18 bzw. zwischen dem Transponder 42 und der zum Nutenstein 18 weisenden Nutseite 46 verbleibt. Diese Freiräume sind in der gezeigten Ausführungsform mit einem nicht dargestellten, lebensmittelsicheren Werkstoff verfüllt, wobei vorliegend ein Klebstoff eingesetzt wurde. Der Transponder 42 und die Kommunikationsvorrichtung 36 sind somit jeweils zumindest auf der einander zugewandten Seite von einem klebstoffgefüllten Spalt umgeben, welcher den Austritt von Radiowellen ermöglicht.

Wie aus Figur 2 ersichtlich ist, liegen sich die in dem Nutenstein 18 und in der Nut 32 der Lochscheibe 28 ausgebildeten Öffnungen 34, 40 genau gegenüber. Die Breite der Öffnungen liegt vorzugsweise zwischen ca. 3 mm und 10 mm, insbesondere für Kommunikationsvorrichtungen 36, die mit Frequenzen im Bereich von 865 MHz bis 869 MHz arbeiten.

Der (radiale) Abstand zwischen Kommunikationsvorrichtung 36 und Transponder 42 ist vorzugsweise kleiner als 20 mm, weiter bevorzugt kleiner als 10 mm und besonders bevorzugt kleiner als 5 mm.

Wie aus den Figuren 1 und 2 ersichtlich, ist die Kommunikationsvorrichtung 36 über Leitungen 48a, 48b mit einer exemplarisch dargestellten elektronischen Schaltung 50 verbunden. Die elektronische Schaltung 50 ist über Leitungen 52a, 52b mit einer ebenfalls exemplarisch dargestellten Maschinensteuerung 54 verbunden. Die elektronische Schaltung 50 und die Maschinensteuerung 54 sind vorzugsweise innerhalb des in Figur 1 nur teilweise dargestellten Gehäuses 12 des Fleischwolfs angeordnet.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die kann im Rahmen der Ansprüche und unter Berücksichtigung der Kenntnisse des zuständigen Fachmanns variiert werden.

### Bezugszeichenliste

- 10: Ausschnitt
- 12: Gehäuse
- 14: Vertiefung
- 16: Nut (im Gehäuse)
- 18: Nutenstein
- 20: Vorsprung (gehäuseseitig)
- 22: Schneidsatzteil
- 24: Innenwand (des Gehäuses)
- 26: Verdrehsicherung
- 28: Lochscheibe
- 30: Durchgangsöffnung
- 32: Nut (in der Lochscheibe)
- 34: Öffnung (im Gehäuse)
- 36: Kommunikationsvorrichtung
- 38: Antenne
- 40: Öffnung (im Schneidsatzteil)
- 42: Transponder
- 44: Seitenwand
- 46: Nutseite
- 48a, 48b: Leitungen
- 50: elektronische Schaltung
- 52a, 52b: Leitungen
- 54: Maschinensteuerung

## Patentansprüche

1. Fleischwolf mit Gehäuse (12), mindestens einer Fördereinrichtung zur Förderung von zu wolfendem Material von einer Eintrittsöffnung zu einer Austrittsöffnung und mindestens einem in dem Gehäuse (12) angeordneten Schneidsatzteil (22), wobei in oder an dem mindestens einen Schneidsatzteil (22) mindestens ein Transponder (42) und in oder an dem Gehäuse (12) mindestens eine Kommunikationsvorrichtung (36) zur Kommunikation mit dem Transponder (42) derart angeordnet sind, dass ein Datenaustausch zwischen Kommunikationsvorrichtung (36) und Transponder (42) ermöglicht ist, wobei der Transponder (42) innerhalb des Schneidsatzteils (22) angeordnet ist, **dadurch gekennzeichnet, dass** die Kommunikationsvorrichtung innerhalb des Gehäuses (12) angeordnet ist.

2. Fleischwolf nach einem oder mehreren der vorstehenden Ansprüche, **dadurch gekennzeichnet, dass** in dem Gehäuse mindestens ein erstes Element zur Verdrehsicherung (26) angeordnet oder ausgebildet ist und in dem mindestens einen Schneidsatzteil (22) ein korrespondierendes zweites Element zur Verdrehsicherung (26) ausgebildet ist, um das Schneidsatzteil (22) verdrehsicher in dem Gehäuse (12) anzuordnen, und mindestens eine Kommunikationsvorrichtung (36) in oder an dem ersten Element der Verdrehsicherung (26) und mindestens ein Transponder (42) in oder an dem zweiten Element der Verdrehsicherung (26) angeordnet ist.

3. Fleischwolf nach Anspruch 2, **dadurch gekennzeichnet, dass** das erste Element der Verdrehsicherung ein Nutenstein (18) und das zweite Element der Verdrehsicherung eine mit dem Nutenstein korrespondierende Nut (16) ist.

4. Fleischwolf nach einem oder mehreren der vorstehenden Ansprüche, **dadurch gekennzeichnet, dass** mindestens ein Transponder (42) in einer in dem Schneidsatzteil (22) ausgebildeten Öffnung (40) und/oder mindestens eine Kommunikationsvorrichtung (36) in einer in dem Gehäuse (12) ausgebildeten Öffnung (34) eingesetzt ist.

5. Fleischwolf nach Anspruch 4, **dadurch gekennzeichnet, dass** die in dem Schneidsatzteil ausgebildete Öffnung (40) und die in dem Gehäuse (12) ausgebildeten Öffnung (34) gegenüberliegend angeordnet sind.

6. Fleischwolf nach einem oder mehreren der vorstehenden Ansprüche, **dadurch gekennzeichnet, dass** die Kommunikationsvorrichtung (36) Mittel zum Senden von Daten an den Transponder (42) sowie Mittel zum Empfangen von Daten von dem Transponder (42) aufweist und mit einer elektronischen Schaltung (50) und/oder einer Maschinensteuerung (54) verbunden ist.

7. Fleischwolf nach Anspruch 6, **dadurch gekennzeichnet, dass** die elektronische Schaltung und/oder Maschinensteuerung (54) ein Prüfmodul zur Durchführung sicherheitsrelevanter und/oder funktionaler Prüfprozeduren unter Einbeziehung des mindestens einen Transponders (42) umfasst.

8. Fleischwolf nach einem oder mehreren der vorstehenden Ansprüche, **dadurch gekennzeichnet, dass** die mindestens eine Kommunikationsvorrichtung (36) im Bereich der Austrittsöffnung angeordnet ist.

9. Fleischwolf nach einem oder mehreren der vorstehenden Ansprüche, **dadurch gekennzeichnet, dass** ferner mindestens eines der nachfolgenden Merkmale vorhanden ist:
a) Die Fördereinrichtung umfasst eine Antriebswelle, auf welcher mindestens ein Schneidsatzteil angeordnet und mittels einer Überwurfmutter in axialer Richtung fixiert ist,
b) Die Fördereinrichtung ist eine mit einer Antriebswelle verbundene oder an einer Antriebswelle ausgebildete Förderschnecke, die teilweise im Gehäuse (12) und teilweise gegenüber mindestens einem Schneidsatzteil (22) gelagert ist,
c) Mindestens ein Transponder (42) ist in einem äußeren Bereich eines Schneidsatzteils (22) angeordnet.
d) Es ist eine Anzeige für einen Benutzer für mittels Kommunikationsvorrichtung (36) und Transponder (42) ermittelte funktionsrelevante und/oder sicherheitsrelevante Informationen vorgesehen.
e) Die Anordnung des mindestens einen Transponders (42) in oder an dem Schneidsatzteil (22) und der mindestens einen Kommunikationsvorrichtung (36) in oder an dem Gehäuse (12) erfolgt in einer Art und Weise, dass ein nicht korrekt in das Gehäuse (12) eingesetztes Schneidsatzteil (22) aufgrund der relativen Lage von Transponder (42) zu Kommunikationsvorrichtung (36) erkennbar ist.
f) Es ist ein Festspeicher und/oder eine Fernmeldeeinrichtung vorgesehen.

## Claims

1. Meat grinder having a housing (12), at least one conveying device for conveying material to be ground from an inlet opening to an outlet opening, and at least one cutting-unit part (22) which is arranged in the housing (12), wherein at least one transponder (42) is arranged in or on the at least one cutting-unit part (22), and at least one communication device (36) for communicating with the transponder (42) is arranged in or on the housing (12), in such a way that an exchange of data between the communication device (36) and the transponder (42) is made possible,
wherein the transponder (42) is arranged within the cutting-unit part (22), **characterized in**
**that** the communication device is arranged within the housing (12).

2. Meat grinder according to one or several of the preceding claims, **characterized in that** at least a first anti-rotation element (26) is arranged or formed in the housing, and a corresponding second anti-rotation element (26) is formed in the at least one cutting-unit part (22) in order to arrange the cutting-unit part (22) secured against rotation in the housing (12), and at least one communication device (36) is arranged in or on the first anti-rotation element (26), and at least one transponder (42) is arranged in or on the second anti-rotation element (26).

3. Meat grinder according to claim 2, **characterized in that** the first anti-rotation element is a sliding block (18), and the second anti-rotation element is a groove (16) which corresponds with the sliding block.

4. Meat grinder according to one or several of the preceding claims, **characterized in that** at least one transponder (42) is inserted in an opening (40) formed in the cutting-unit part (22), and/or at least one communication device (36) is inserted in an opening (34) formed in the housing (12).

5. Meat grinder according to claim 4, **characterized in that** the opening (40) formed in the cutting-unit part and the opening (34) formed in the housing (12) are arranged opposite one another.

6. Meat grinder according to one or several of the preceding claims, **characterized in that** the communication device (36) has means for transmitting data to the transponder (42), and means for receiving data from the transponder (42), and is connected to an electronic circuit (50) and/or a machine controller (54).

7. Meat grinder according to claim 6, **characterized in that** the electronic circuit and/or machine controller (54) comprises a test module for carrying out safety-relevant and/or functional test procedures involving the at least one transponder (42).

8. Meat grinder according to one or several of the preceding claims, **characterized in that** the at least one communication device (36) is arranged in the region of the outlet opening.

9. Meat grinder according to one or several of the preceding claims, **characterized in that** in addition at least one of the following features is present:
a) the conveying device comprises a drive shaft on which at least one cutting-unit part is arranged and is secured in the axial direction by means of a union nut,
b) the conveying device is a screw conveyor which is connected to a drive shaft or formed on a drive shaft and is mounted partially in the housing (12) and partially opposite at least one cutting-unit part (22),
c) at least one transponder (42) is arranged in an outer region of a cutting-unit part (22).
d) A display is provided for a user for function-relevant and/or safety-relevant information determined by means of the communication device (36) and transponder (42).
e) The arrangement of the at least one transponder (42) in or on the cutting-unit part (22), and of the at least one communication device (36) in or on the housing (12) takes place in such a way that a cutting-unit part (22) which is not inserted correctly in the housing (12) can be detected on the basis of the relative position of the transponder (42) with respect to the communication device (36).
f) A read-only memory and/or a telecommunication device are/is provided.

## Revendications

1. Hachoir à viande, comprenant un carter (12), au moins un dispositif de transport permettant de transporter le matériau à hacher depuis une ouverture d'entrée vers une ouverture de sortie et au moins un accessoire de coupe (22) agencé dans le carter (12), dans lequel au moins un transpondeur (42) est agencé dans ou au niveau du au moins un accessoire de coupe (22) et au moins un dispositif de communication (36) permettant de communiquer avec le transpondeur (42) est agencé dans ou au niveau du carter (12), de telle manière qu'un échange de données entre le dispositif de communication (36) et le transpondeur (42) est rendu possible, dans lequel le transpondeur (42) est agencé à l'intérieur de l'accessoire de coupe (22),
**caractérisé en ce que**
le dispositif de communication est agencé à l'intérieur du carter (12).

2. Hachoir à viande selon l'une quelconque ou plusieurs des revendications précédentes, **caractérisé en ce qu'**au moins un premier élément anti-rotation (26) est agencé ou réalisé dans le carter et un second élément anti-rotation (26) correspondant est réalisé dans le au moins un accessoire de coupe (22) afin d'agencer l'accessoire de coupe (22) dans le carter (12) de manière à bloquer sa rotation, et au moins un dispositif de communication (36) est agencé dans ou au niveau du premier élément anti-rotation (26) et au moins un transpondeur (42) est agencé dans ou au niveau du second élément anti-rotation (26).

3. Hachoir à viande selon la revendication 2, **caractérisé en ce que** le premier élément anti-rotation est un coulisseau (18) et le second élément anti-rotation est une rainure (16) correspondant au coulisseau.

4. Hachoir à viande selon l'une quelconque ou plusieurs des revendications précédentes, **caractérisé en ce qu'**au moins un transpondeur (42) est inséré dans une ouverture (40) réalisée dans l'accessoire de coupe (22) et/ou au moins un dispositif de communication (36) est inséré dans une ouverture (34) réalisée dans le carter (12).

5. Hachoir à viande selon la revendication 4, **caractérisé en ce que** l'ouverture (40) réalisée dans l'accessoire de coupe et l'ouverture (34) réalisée dans le carter (12) sont agencées face-à-face.

6. Hachoir à viande selon l'une quelconque ou plusieurs des revendications précédentes, **caractérisé en ce que** le dispositif de communication (36) présente un moyen permettant d'envoyer des données vers le transpondeur (42) ainsi qu'un moyen permettant de recevoir des données en provenance du transpondeur (42) et est relié à un circuit électronique (50) et/ou à une commande de machine (54).

7. Hachoir à viande selon la revendication 6, **caractérisé en ce que** le circuit électronique et/ou la commande de machine (54) comprend un module de test permettant de mettre en oeuvre des procédures de test de sécurité et/ou de fonctionnalité faisant intervenir le au moins un transpondeur (42).

8. Hachoir à viande selon l'une quelconque ou plusieurs des revendications précédentes, **caractérisé en ce que** le au moins un dispositif de communication (36) est agencé dans la région de l'ouverture de sortie.

9. Hachoir à viande selon l'une quelconque ou plusieurs des revendications précédentes, **caractérisé en ce qu'**au moins une des caractéristiques ci-dessous est en outre présente :
a) le dispositif de transport comprend un arbre d'entraînement sur lequel au moins un accessoire de coupe est agencé et fixé en direction axiale au moyen d'un écrou à chapeau,
b) le dispositif de transport est une vis transporteuse reliée à un arbre d'entraînement ou réalisée au niveau d'un arbre d'entraînement et montée en partie dans le carter (12) et en partie face à au moins un accessoire de coupe (22),
c) au moins un transpondeur (42) est agencé dans une région extérieure d'un accessoire de coupe (22),
d) un affichage, présentant à un utilisateur des informations relatives à la fonctionnalité et/ou à la sécurité et établies au moyen du dispositif de communication (36) et du transpondeur (42), est prévu,
e) l'agencement du au moins un transpondeur (42) dans ou au niveau de l'accessoire de coupe (22) et du au moins un dispositif de communication (36) dans ou au niveau du carter (12) est mis en oeuvre de telle manière qu'une mauvaise insertion d'un accessoire de coupe (22) dans le carter (12) peut être détectée en se basant sur la position relative du transpondeur (42) par rapport au dispositif de communication (36),
f) une mémoire permanente et/ou un appareil de télécommunication est prévu.
